# EUROPÄISCHE PATENTSCHRIFT

(11) **EP 2 283 908 B1**
(45) Veröffentlichungstag und Bekanntmachung des Hinweises auf die Patenterteilung: **13.03.2013**
(21) Anmeldenummer: 10006831.1
(22) Anmeldetag: 01.07.2010
(51) Int. Cl.: B01D 33/04, B23Q 11/00, B23Q 11/10

(54) **Vorrichtung zur Aufbereitung von Kühlschmierstoff**
Device for processing cooling lubricant
Dispositif destiné à la préparation de lubrifiant réfrigérant

(30) Priorität: 13.07.2009 DE 202009009535 U
(43) Veröffentlichungstag der Anmeldung: 16.02.2011
(73) Patentinhaber: DECKEL MAHO Pfronten GmbH, 87459 Pfronten (DE)
(72) Erfinder: Dietenhauser, Wolfgang, 87448 Waltenhofen (DE); Schielke, Robert, 87459 Pfronten (DE)
(74) Vertreter: Beetz & Partner

(56) Entgegenhaltungen:
- WO-A1-03/064106
- WO-A2-2007/061615
- DE-A1- 10 035 725
- DE-A1- 10 215 584
- DE-U1- 20 020 244
- GB-A- 2 401 328
- US-A- 2 861 688
- US-A- 4 396 506
- US-A- 4 421 645
- US-A- 4 673 502
- US-A1- 2005 145 580

## Beschreibung

Die Erfindung betrifft eine Vorrichtung zur Aufbereitung von Kühlschmierstoff und Spänen von Werkzeugmaschinen der im Oberbegriff des Patentanspruchs 1 angegebenen Gattung.

Die in der spanenden Werkstückbearbeitung eingesetzten Kühlschinierstoffe stellen einen nicht unwesentlichen Kostenfaktor der gesamten Betriebskosten dar. Die beim Schleifen, Fräsen, Drehen, Bohren usw. eingesetzten Kühl- und Schmierflüssigkeiten werden durch die bei der Bearbeitung anfallenden Späne und sonstige Partikel verunreinigt. Die in der Werkzeugmaschine erzeugte Mischung aus Kühlschmierflüssigkeit und Feststoffen, insbesondere Spänen, muss in gesonderten Prozessen außerhalb der Werkzeugmaschine aufbereitet werden, damit die Kühlschmierflüssigkeit wiederverwendet und die ausgesonderten Späne verwertet werden können. Neben der Abtrennung von relativ groben und voluminösen Spänen aus dem flüssigen Medium müssen auch die feinkörnigeren, in der Regel besonders abrasiven Partikel und Stäube aus der Flüssigkeit abgeschieden werden, damit die so gereinigte Flüssigkeit erneut als Kühlschmierstoff in der jeweiligen Werkzeugmaschine eingesetzt werden kann.

In der WO 03/064106 A1 ist eine Vorrichtung zum Separieren und Austragen von Spänen und Arbeitsflüssigkeit von Werkzeugmaschinen offenbart, bei welcher in einem Behälter zur Aufnahme des unbehandelten Gemisches aus Kühlschmierstoffen und Feststoffen ein Endlosförderer 6 für den Abtransport der gesammelten Feststoffe und eine Filtriereinheit in Form eines Siebkastens vorgesehen sind. Der Siebkasten ist im Behälter in einem horizontal verlaufenden Abschnitt des Endlosförderers zwischen dessen Obertrum und dessen Untertrum angeordnet und ragt in einen seitlich über den Endlosförderer vorstehenden Anschlussbereich hinein und ist über einen Schnellanschluss mit der Filtratsaugleitung verbunden. Nach Demontage dieser Filtratsaugleitung vom Schnellanschluss kann der Siebkasten durch eine nach aufwärts gerichtete Schwenkbewegung aus seiner Arbeitsposition herausgezogen werden.

Aus der DE-A-199 47 724 ist eine Vorrichtung zum Reinigen von Flüssigkeiten, wie z.B. von Kühlschmierstoffen (KSS) von spanabhebenden Werkzeugmaschinen, bekannt, in welcher die verunreinigte Flüssigkeit einer Filtration unterzogen wird. In einem Behälter zur Aufnahme der umbehandelten Flüssigkeits-Späne-Mischung ist in dessen Bodennähe ein Kratzerförderer installiert, dessen Untertrum die im unteren Behälterteil abgelagerten Späne schräg nach aufwärts zu einem Abwurfkopf transportiert. Als Filtereinheit dient eine im Flüssigkeitsbehälter vertikal fest angeordnete Filtertrommel, die stehend oder hängend im Hauptteil des Flüssigkeitsbehälters von oben eingesetzt und drehfest fixiert wird. Am Außenumfang der vertikal ausgerichteten Filtertrommel ist ein Spaltsieb als Filtermittel angeordnet, zu dessen Reinigung mehrere winkelversetzt positionierte Reinigungselemente vorgesehen sind. Jedes Reinigungselement besteht aus einer Kratzerleiste und einer Bürstenleiste, die am Umfang der Filtertrommel anliegen, wenn die Reinigungsvorrichtung durch einen Antrieb gedreht wird. Diese bekannte Aufbereitungsvorrichtung ist technisch aufwendig und hat einen beträchtlichen Platzbedarf.

Aus der US 4 751 006 A ist eine Vorrichtung zur Aufbereitung und Kühlung eines im Betrieb der Werkzeugmaschine erwärmten Kühlschmierstoffs bekannt, die in einem Aufnahmebehälter für die durch Feststoffe bzw. Späne verschmutzte Flüssigkeit einen Kratzerförderer mit quer ausgerichteten Kratzerleisten zum Abfördern der Späne auf weist. Im oberen Teil des Aufnahmebehälters ist eine Filtriervorrichtung vorgesehen, die ein endloses angetriebenes Siebband und einen auf diesem aufliegenden durchlaufenden Papierbandfilter enthält. Das Papierband des Filters wird von einer Rolle abgewickelt, läuft durch die Filtrierstation auf dem Siebband und wird zusammen mit den abgelagerten Feststoffen auf eine zweite Rolle aufgewickelt.

Weiterhin ist z.B. aus der EP-B-1 474 268 eine Vorrichtung zur Trennung von Spänen und Kühlflüssigkeit aus der spanenden Werkstückbearbeitung bekannt, die einen Aufnahmebehälter für die Mischung aus Kühlflüssigkeit und Spänen sowie einen im Behälter angeordneten Endlosförderer aufweist. Der Endlosförderer ist als Kratzerförderer ausgebildet, der über mehrere Umlenkräder im Aufnahmebehälter läuft und die erfassten Feststoffe (Späne) über einen schrägen Austragsabschnitt zu einem oberen Abwurf transportiert. Im Übergang zwischen dem horizontalen und dem schrägen Abschnitt des Kratzerförderers ist eine horizontal ausgerichtete Filtertrommel drehbar gelagert, die von dem umlaufenden Kratzerförderer angetrieben wird. In der Filtertrommel wird ein Unterdruck aufrechterhalten, sodass die Flüssigkeit durch den Filter hindurch in das Tommelinnere gesaugt wird. Die Lageranordnung der Filtertrommel besteht aus je einem stirnseitigen inneren und äußeren Lagerring sowie aus achsparallelen Federelementen und Dichtorganen. An ihrem Außenumfang ist die Trommel mit einer Filterbespannung versehen. Nachteilig bei dieser bekannten Vorrichtung ist der für eine effektive Reinigung insbesondere der Filtertrommel und ihrer Nebenaggregate erforderliche Aufwand. Ferner sind besondere Maßnahmen zur Anpassung der Vorrichtung an unterschiedliche oder sich ändernde Betriebsparameter der jeweils zugeordneten Werkzeugmaschine notwendig.

Aufgabe der Erfindung ist es, eine Vorrichtung zur Aufbereitung bzw. zur Reinigung von Kühlschmierstoff (KSS) zu schaffen, die eine effektive Förderung der gröberen Schmutzpartikel und Späne sowie auch eine wirksame Reinigung der Schmierflüssigkeit durch Abtrennen von feinsten Spänen und Staubpartikeln ermöglicht, und deren Filteraggregat durch einfache Maßnahmen aus der Vorrichtung ausgebaut und gereinigt werden kann.

Diese Aufgabe wird durch die Merkmale des Patentanspruchs 1 gelöst. Die erfindungsgemäße Vorrichtung zur Aufbereitung von Kühlschmierstoffen und Spänen von Werkzeugmaschinen weist einen Behälter zur Aufnahme der unbehandelten Mischung aus Kühlschmierstoff und Feststoff auf. In dem Behälter ist ein Endlosförderer für den Abtransport der gesammelten Feststoffe aus dem Behälter angeordnet, der zweckmäßig als Kratzerförderer ausgebildet ist. Zum Trennen der Kühlschmierflüssigkeit von den darin enthaltenen Feststoffen dient mindestens eine Filtriereinheit, die im Behälter angeordnet ist und in der ein Unterdruck aufrechterhalten wird. Die Filtriereinheit ist mobil bzw. bewegbar ausgebildet und als Einschub in dem Behälter oberhalb des Untertrums des Endlosförderers positionierbar.

Die erfindungsgemäße Ausbildung der Filtriereinheit als eigenständige Baugruppe ergibt den Vorteil, dass die Filtriereinheit auf einfachste Weise aus der Vorrichtung herausgenommen, gereinigt und anschließend wieder an ihren ursprünglichen Platz in der Vorrichtung eingeschoben werden kann. Es besteht die zweckmäßige Möglichkeit, mehrere gleichartige oder verschiedenartige Filtriereinheiten auf Vorrat zu halten und je nach speziellen Einsatzbedingungen ein jeweils besonders geeignetes Aggregat in die Vorrichtung einzusetzen. Auch die Inspektions- und Wartungsarbeiten an den Filtriereinheiten werden durch deren Ausbaumöglichkeit vereinfacht.

Gemäß der Erfindung enthält die Filtriereinheit einen flachen Siebkasten, in dem ein Unterdruck herrscht und der ein planares Spaltsieb zwischen zwei seitlichen Längsholmen sowie ein längs bewegtes Endlosfilterband enthält, wobei die Kühlschmierflüssigkeit von unten durch das Filterband hindurch in den Siebkasten gesaugt wird. Der flache Siebkasten der Filtriereinheit ermöglicht sein einfaches Einschieben zwischen das Untertrum und das Obertrum des Endlosförderers und die Anordnung des längs bewegten Endlosfilterbandes auf dem planaren Spaltsieb ergibt eine großflächige Abstützung des flexiblen Filterbandes auch bei Anlegen eines erheblichen Unterdruckes im Innenraum des Siebkastens. Damit können auch feinporige bzw. feinmaschige Filterbänder mit der entsprechend hohen Reinigungswirkung eingesetzt werden. Als besonders dauerhaft und verschleißfest hat sich ein feinmaschiges Stahlgewebe als Filterband erwiesen. Das Filterband ist am vorderen und hinteren Ende des Filterkastens über ggf. angetriebene Umlenkrollen geführt, die in Lagerungen an den Längsholmen gelagert sind.

Einen besonderen praktischen Vorteil bietet eine weitere Ausgestaltung der Erfindung, gemäß der seitlich am Siebkasten ein Einschubmechanismus vorgesehen ist. Dieser Einschubmechanismus kann eine an einem Längsholm des Siebkastens angreifende deichselartige Zug- und Schubstange mit einem Handgriff aufweisen, durch die der Siebkasten seitlich aus der Vorrichtung zur Reinigung herausgezogen bzw. in seine Betriebsposition zurückgeschoben werden kann.

Ein zusätzlicher Sortiereffekt der erfindungsgemäßen Aufbereitungsvorrichtung lässt sich dadurch erzielen, dass im Behälter oberhalb des Siebkastens ein mit Durchgängen geeigneter Größe versehener Zwischenboden zum Auffangen der gröberen Späne vorgesehen ist. Der

Zwischenboden ist im Wirkungsbereich des Obertrums des Endlosförderers angeordnet. Grobe Späne fallen auf den Zwischenboden und werden von den Mitnehmern der Förderkette bis über das Ende der Filtriereinheit transportiert. Da der Zwischenboden schlitzförmige Durchgänge von jeweils geeigneter Öffnungsweite aufweist, können die Kühlschmierflüssigkeit und die feinen Späne durch diese Öffnungen in den unteren Bereich des Späneförderers abfließen und von dessen Untertrum erfasst oder in den Innenraum des Siebkastens eingesaugt werden.

Zum Zwecke einer intensiven Reinigung des Filterbandes und der weiteren Bauteile können im Siebkasten Reinigungsdüsen installiert sein, über die ein Fluid, z.B. Druckluft oder gereinigte Kühlschmierflüssigkeit, von innen auf das Filtergewebe gesprüht wird.

Schließlich lässt sich eine besonders einfache Handhabung der Filtriereinheit dadurch erreichen, dass die Filtriereinheit insgesamt oder mit ihren funktionswesentlichen Bauteilen aus ihrer Betriebsstellung herausgefahren und in diese eingeschoben werden kann.

Im Folgenden wird ein bevorzugtes Ausführungsbeispiel der Erfindung anhand der Zeichnung ausführlicher beschrieben. Es zeigen:
- Fig. 1: ein Ausführungsbeispiel der erfindungsgemäßen Aufbereitungsvorrichtung in grob schematischer perspektivischer Darstellung;
- Fig. 2: einen in der Vorrichtung nach Fig. 1 verwendeten Filterkasten in schematischer perspektivischer Darstellung;
- Fig. 3: einen vergrößerten schematischen Ausschnitt der Aufbereitungsvorrichtung in der Ausführung nach Fig. 1 im Bereich der Filtriereinheit.

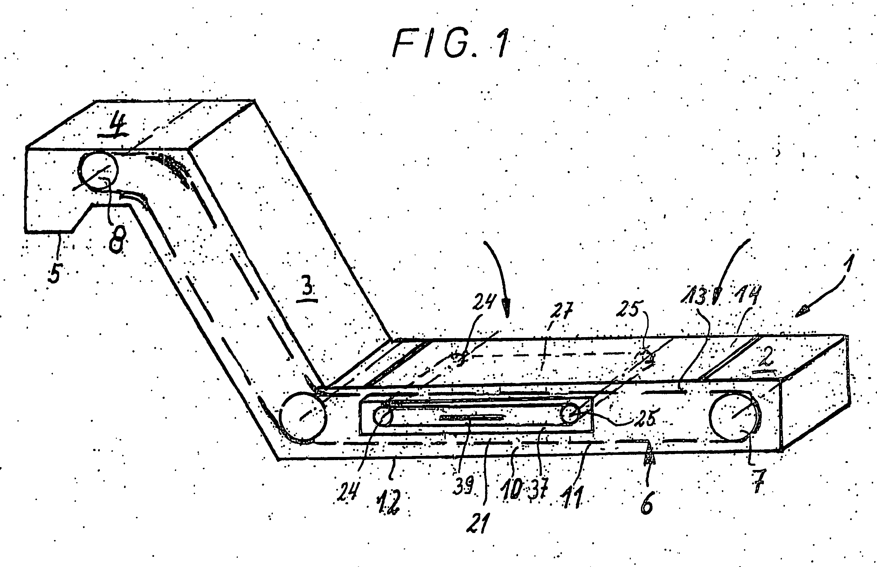

Das dargestellte Ausführungsbeispiel der erfindungsgemäßen Aufbereitungsvorrichtung enthält einen Behälter 1, der ein Unterteil eines größeren Aufnahmebehälters für die aus der Maschine kommende unbehandelte Mischung aus KSS, Spänen, etc. sein kann. Der Behälter 1 enthält eine obere Einlauföffnung 14, durch die die unbehandelte Mischung aus Kühlschmierflüssigkeit (KSS) und darin eingelagerten Feststoffen, wie Spänen, Schmutzpartikeln od. dgl. in den Behälter 1 eingeführt wird. An einen horizontalen Teil 2 des Behälters 1 schließt an dem in Fig. 1 linken Ende ein schräg aufwärts verlaufender Abschnitt 3 an. Das obere Ende dieses schrägen Abschnitts 3 geht in einen Austragskopf 4 über, der eine nach unten weisende Austragsöffnung 5 enthält. Die Behälterkonstruktion besteht vorzugsweise aus korrosionsfestem Stahlblech. In dem Behälter 1 ist ein Endlosförderer 6 angeordnet, der hier als allgemein bekannter Kratzerförderer ausgebildet ist und über Treib- und Umlenkrollen 7, 8 läuft. Dieser Kratzerförderer 6 weist zwei zueinander parallel laufende Endlosketten auf, von denen nur eine Endloskette 10 dargestellt ist und die beide durch in vorgegebenen Abständen angeordnete Kratzerleisten 9 miteinander verbunden sind. Das Untertrum 11 des Kratzerförderers 6 läuft in geringem vertikalen Abstand zum Boden 12 des Behälters 1 und das Obertrum 13 des Kratzerförderers 6 verläuft in geringem Abstand unter der Oberkante des Behälterteils 2.

Die dargestellte Aufbereitungsvorrichtung weist eine Filtriereinheit 20 auf, die in dem dargestellten Betriebszustand im horizontalen Teil 2 des Behälters 1 im Raum zwischen dem Untertrum 11 und dem Obertrum 13 des Kettenförderers 6 als Einschub plaziert ist. Diese Filtriereinheit 20 kann auf einfache Weise aus der dargestellten Position im Behälter 1 herausgezogen und beispielsweise nach Durchführung von Inspektions- oder Wartungsarbeiten an Einzelteilen der Filtriereinheit 20 wieder in die dargestellte Position im Behälter 1 eingeschoben werden.

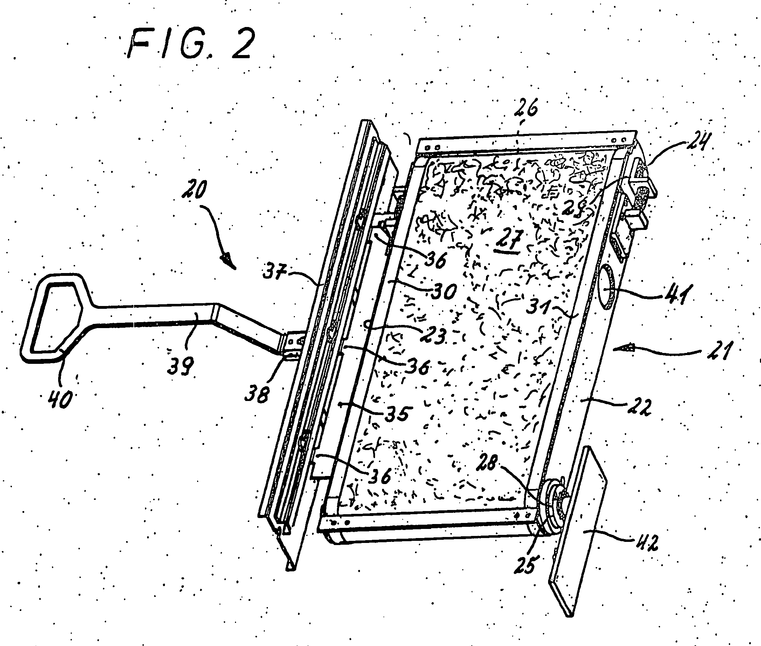

In Fig. 2 ist eine bevorzugte Ausführungsform der Filtriereinheit 20 in perspektivischer schematischer Darstellung gezeigt. Die Filtriereinheit 20 enthält einen Sieb- bzw. Filterkasten 21, der hier als Stabfilterkasten ausgebildet ist. Dieser Stabfilterkasten enthält zwei zueinander parallele Seitenwände 22, 23 von profiliertem Querschnitt, die an ihren Enden Lagerungen 24, 25 aufweisen. In dem Raum zwischen den beiden Seitenwänden 22, 23 ist ein rechteckiger Behälterkasten 26 angeordnet, an dessen Boden ein Flachsieb 32 vorgesehen ist, das aus einem geschlitzten Blech oder aus einer Vielzahl von parallelen Stäben bestehen kann. An den Außenseiten dieses Behäterkastens 26 läuft ein Endlosfilterband 27, das aus einem zugfesten Vlies oder einem feinmaschigen flexiblen Stahlgewebe bestehen kann und um endseitige Treib- und Umlenkrollen 28, 29 läuft. Diese Rollen 28, 29 sind in den Lagerungen 24, 25 der Seitenwände 22, 23 drehbar gelagert. Zu beiden Seiten der Endlosfilterbands 27 oberhalb der beiden Seitenwände 22, 23 sind Dichtgummibänder 30, 31 vorgesehen, die zusammen mit dem Endlosfilterband 27 umlaufen oder auch stationär ausgebildet sein können. Um eine vorgegebene Längsspannung des Endlosfilterbands 27 aufrechtzuerhalten, sind Schraubspanner an den Außenseiten der Seitenwände montiert, mit denen die Lagerung 24, 25 in Längsrichtung verstellt werden kann. Das feinmaschige Stahlgewebe des Endlosfilterbands 27 sollte eine Maschenweite von 30 bis 150 µm, vorzugsweise von 50 bis 80 µm haben.

An der in Fig. 2 linken Seitenwand 23 des Siebkastens 21 ist ein langgestreckter flacher Zwischenträger 35 montiert, der drei voneinander beabstandete Zungen 36 aufweist, die gelenkig an einer Profilleiste angreifen, die an der Rückseite eines langgestreckten Hochkantblechprofils 37 befestigt ist. Dieses Blechprofil 37 weist ein mittleres Lager 38 auf, an welchem eine deichselartige Zug- und Schubstange 39 gelagert ist, die in einem Handgriff 40 endet. Mit Hilfe dieser Zug- und Schubstange 39 kann der dargestellte Spaltsiebkasten 21 quer zu seiner Längsrichtung manuell verfahren werden.

In zumindest einer der Seitenwände 22, 23 ist eine Öffnung 41 ausgebildet, die einen Flüssigkeitsdurchlass zum Innenraum des Siebkastens 21 darstellt und mit einer Hebepumpe über geeignete Verbindungsmittel, wie Schläuche, Steckanschlüsse u. dgl., kommuniziert.

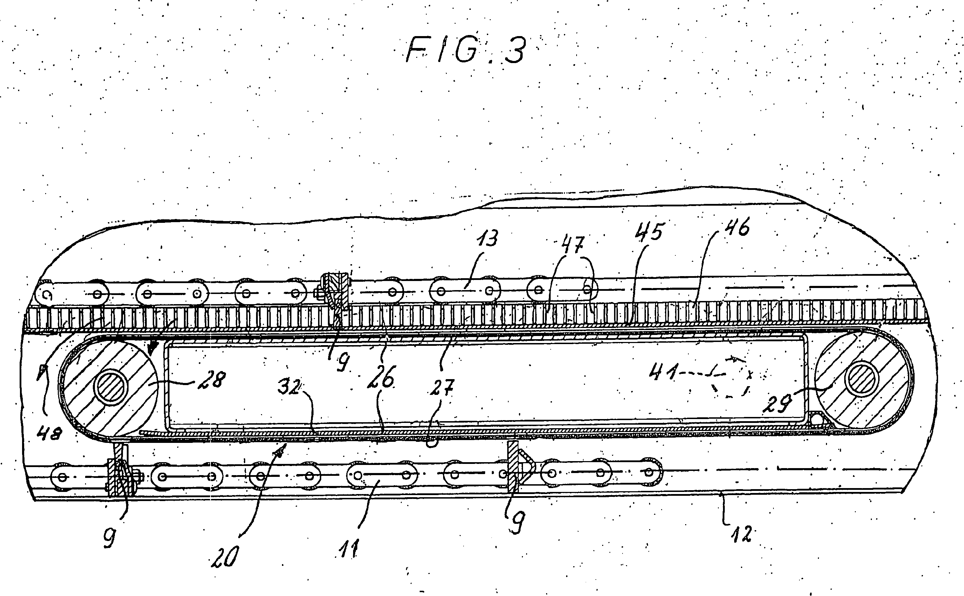

Wie aus Fig. 3 ersichtlicht, ist bei der dargestellten Ausführung zwischen dem Obertrum 13 des Kratzerförderers 6 und der Oberseite der Filtriereinheit 20 ein ebener Zwischenboden 45 angeordnet, dessen beide Längsränder 46 vertikal aufgebogen sind. In jedem dieser beiden Längsränder 46 ist eine Vielzahl von gleich beabstandeten Schlitzöffnungen 47 ausgebildet. Gröbere Späne fallen auf den Zwischenboden 45 und werden von den Querleisten 9 des Kratzerförderers 6 mitgenommen. Das Kühlschmiermittel und die feinen Späne fließen durch die seitlichen Schlitzöffnungen 47 in den Rändern 46 des Zwischenbodens 45 in den unteren Bereich des Kratzerförderers 6, wie durch die bogenförmigen Pfeile 48 angedeutet.

Zum Antrieb des Endlosfilterbands 27 dient ein direkter oder indirekter Antrieb, der hier ein Kettenradtrieb ist, dessen Kettenrad in die Gliederbandkette im Untertrum 11 des Kratzerförderers eingreift. Die Welle des Kettenrads ist über einen Riementrieb mit der Antriebswelle für das Endlosfilterband 27 verbunden. Natürlich sind auch andere geeignete Antriebsaggregate für den direkten oder auch indirekten Antrieb des Endlosfilterbands 27 einsetzbar. Bei dem dargestellten Ausführungsbeispiel sind unterhalb der in Fig. 3 linken Lageranordnung Reinigungsdüsen vorgesehen, die gereinigtes Kühlschmiermittel von innen auf das Filtergewebe sprühen, um am Filtergewebe festgesetzten Schmutz zu entfernen.

Die Funktionsweise der vorstehend beschriebenen Aufbereitungsvorrichtung ist folgende.

Die zu reinigende Mischung aus Kühlschmierflüssigkeit, Spänen und ggf. anderen Feststoffpartikeln fließt durch die oberseitige Einlauföffnung 14 in den horizontalen Teil 2 des Behälters 1. Die gröberen Späne setzen sich auf dem Zwischenboden 45 ab und werden von den Kratzerleisten 9 des Obertrums 13 des Kratzerförderers 6 mitgenommen. Die Kühlschmierflüssigkeit fließt zusammen mit den feinkörnigen Feststoffpartikeln durch die seitlichen Schlitzöffnungen 47 in den beiden Längsrändern 46 des Zwischenbodens 45. Da in dem Innenraum des Behälterkastens 26 durch die Wirkung der angeschlossenen Hebepumpe ein Unterdruck herrscht, werden Kühlschmierflüssigkeit und die feinkörnigen Feststoffe durch das Untertrum des umlaufenden Endlosfilterbands 27 hindurch und durch das Flachsieb 32 in den Innenraum des Behälterkastens 26 gesaugt und über die Anschlussöffnung 41 und die Pumpe ausgetragen bzw. zur Bearbeitungsmaschine zurückgeführt.

Beim Spanen besonderer Werkstoffe entstehen häufig große Mengenanteile an feinkörnigen Spänen, durch welche die angeschlossenen Aufbereitungs- bzw. Reinigungsvorrichtungen entsprechend hoch belastet werden. Insbesondere die eingesetzten Siebe und Filterelemente müssen in diesen Fällen relativ häufig gereinigt oder ausgetauscht werden, was eine Unterbrechung des Reinigungsbetriebs bedeutet. Durch die mobile Ausbildung der Filtriereinheit als montierte Baugruppe vereinfachen sich die Inspektions- und Wartungsarbeiten erheblich, da alle relevanten Vorgänge bei herausgezogener Filtriereinheit außerhalb der Reinigungs- bzw. Aufbereitungsvorrichtung durchgeführt werden können.

Die Erfindung ist nicht auf das dargestellte Ausführungsbeispiel beschränkt. Um die Mobilität und Verfahrbarkeit der Filtereinheit 20 zu fördern, können Laufrollen oder Gleitorgane an einer unteren Tragkonstruktion vorgesehen sein, sodass zum Einschieben und Herausziehen der Filtereinheit 20 mit dem Siebkasten 21 nur eine geringe Kraft aufgebracht werden muss. Auch andere Varianten sind möglich, beispielsweise die Verwendung von anderen Siebtypen statt des eingesetzten Spaltsiebes. Statt des feinmaschigen Stahldrahtgewebes können auch andere bekannte Filtermaterialien für das endlos umlaufende Filterband 27 eingesetzt werden.

## Patentansprüche

1. Vorrichtung zur Aufbereitung von Kühlschmierstoffen und Spänen von Werkzeugmaschinen mit
- einem Behälter (1) zur Aufnahme des unbehandelten Gemisches aus Kühlschmierflüssigkeit und Feststoffen,
- einem im Behälter (1) installierten Endlosförderer (6) für den Abtransport der gesammelten Feststoffe aus dem Behälter (1), und
- mindestens einer im Behälter (1) angeordneten Filtriereinheit (20) zum Trennen der Kühlschmierflüssigkeit von den Feststoffen,
- wobei die Filtriereinheit (20) einen horizontal im Behälter (1) zwischen dem Obertrum (13) und dem Untertrum (11) des Endlosförderers (6) positionierbaren Siebkasten (21) enthält, der an einen Unterdruckerzeuger angeschlossen ist,
**dadurch gekennzeichnet, dass**
- der als flacher Einschub ausgebildete Siebkasten (21) zwei Seitenwände (22, 23), ein Flachsieb (32) an seinem Boden und ein längs bewegtes Endlosfilterband (27) aufweist, wobei der Kühlschmierstoff von unten durch das Endlosfilterband (27) hindurch in den Innenraum des Siebkastens (21) gesaugt wird,
- an der einen Seitenwand (23) des Siebkastens (21) ein Einschubmechanismus (37-40) vorgesehen ist, mit dem der Siebkasten (21) horizontal in seine Betriebsstellung und aus dieser seitlich heraus bewegbar ist, und
- in der anderen Seitenwand (22) eine Öffnung (41) ausgebildet ist, die einen Durchlass zum Innenraum des Siebkastens (21) darstellt und mit einer Hebepumpe über geeignete Verbindungsmittel kommuniziert.

2. Vorrichtung nach Anspruch 1,
**dadurch gekennzeichnet, dass**
zu beiden Seiten des Endlosfilterbands (27) oberhalb der beiden Seitenwände (22, 23) Dichtungsbänder (30, 31) angeordnet sind.

3. Vorrichtung nach Anspruch 1 oder 2,
**dadurch gekennzeichnet, dass**
an den Seitenwänden (22, 23) Lagerungen (24, 25) für Umlenkrollen (28, 29) des Endlosfilterbands (27) vorgesehen sind.

4. Vorrichtung nach einem der Ansprüche 1 bis 3,
**dadurch gekennzeichnet, dass**
das Endlosfilterband (27) aus einem feinmaschigen Stahlgewebe mit einer Maschenweite von 30 bis 150 µm, vorzugsweise von 50 bis 80 µm, besteht.

5. Vorrichtung nach einem der vorstehenden Ansprüche,
**dadurch gekennzeichnet, dass**
der Einschubmechanismus (37 bis 40) eine an der Seitenwand (23) des Siebkastens (21) angreifende Zug- und Schubstange (39) mit Handgriff (40) aufweist.

6. Vorrichtung nach einem der vorstehenden Ansprüche,
**dadurch gekennzeichnet, dass**
im Behälter (1) oberhalb des Siebkastens (21) ein mit seitlichen Durchgangsöffnungen (47) versehener Zwischenboden (45) vorgesehen ist, auf dem sich die gröberen Späne bis zur Mitnahme durch den Kratzerförderer (6) ablagern.

7. Vorrichtung nach einem der vorstehenden Ansprüche,
**dadurch gekennzeichnet, dass**
ein direkter oder indirekter Antrieb für die Umlaufbewegung des Endlosfilterbands (27) vorgesehen ist.

8. Vorrichtung nach einem der vorstehenden Ansprüche,
**dadurch gekennzeichnet, dass**
im Siebkasten (21) Reinigungsdüsen (53) installiert sind, über die gereinigte Kühlschmierflüssigkeit von innen auf das Filterband (27) gesprüht wird.

9. Vorrichtung nach einem der vorstehenden Ansprüche,
**dadurch gekennzeichnet, dass**
am Siebkasten (21) Spanner zur Aufrechterhaltung einer kontinuierlichen Längsspannung des Endlosfilterbands (27) vorgesehen sind.

10. Vorrichtung nach einem der vorstehenden Ansprüche,
**dadurch gekennzeichnet, dass**
am Siebkasten (21) Rollen oder Gleitelemente zum leichten horizontalen Verfahren vorgesehen sind.

## Claims

1. Device for processing cooling lubricants and chips of machine tools having:
- a container (1) for receiving the untreated mixture of cooling lubricant liquid and solids,
- an endless conveyor (6) installed in the container (1) for carrying away the collected solids from the container (1), and
- at least one filtration unit (20) disposed in the container (1) for separating the cooling lubricant liquid from the solids,
- wherein the filtration unit (20) contains a screen box (21) which can be positioned horizontally in the container (1) between the upper run (13) and the lower run (11) of the endless conveyor (6) and which is attached to a generator of negative pressure,
**characterised in that**
- the screen box (21), formed as a flat insert, has two side walls (22, 23), a flat screen (32) at its base and a longitudinally moveable endless filter belt (27), wherein the cooling lubricant is sucked into the inner space of the screen box (21) from below through the endless filter belt (27),
- an insertion mechanism (37-40) is provided on one side wall (23) of the screen box (21), with which mechanism the screen box (21) can be moved horizontally into its operative position and sideways out of this position, and
- in the other side wall (22) an opening (41) is formed which constitutes a passage to the inner space of the screen box (21) and communicates with a lifting pump via suitable connection means.

2. Device as claimed in claim 1, **characterised in that** sealing bands (30,31) are disposed above the two side walls (22, 23) on both sides of the endless filter belt (27).

3. Device as claimed in claim 1 or 2, **characterised in that** bearings (24, 25) for deflection rollers (28, 29) of the endless filter belt (27) are provided on the side walls (22, 23).

4. Device as claimed in any one of claims 1 to 3, **characterised in that** the endless filter belt (27) consists of a fine-mesh steel fabric having a mesh size of from 30 to 150 µm, preferably from 50 to 80 µm.

5. Device as claimed in any one of the preceding claims, **characterised in that** the insertion mechanism (37 to 40) has a pull and push rod (39), with a handle (40), engaging on the side wall (23) of the screen box (21).

6. Device as claimed in any one of the preceding claims, **characterised in that** an intermediate base (45) provided with lateral through openings (47) is provided in the container (1) above the screen box (21), on which intermediate base the coarser chips settle until they are carried along by the drag conveyor (6).

7. Device as claimed in any one of the preceding claims, **characterised in that** a direct or indirect drive is provided for the circulating movement of the endless filter belt (27).

8. Device as claimed in any one of the preceding claims, **characterised in that** cleaning nozzles (53) are installed in the screen box (21), by means of which cleaned cooling lubricant liquid is sprayed onto the filter belt (27) from inside.

9. Device as claimed in any one of the preceding claims, **characterised in that** tensioning means for maintaining a continuous longitudinal tension of the endless filter belt (27) are provided on the screen box (21).

10. Device as claimed in any one of the preceding claims, **characterised in that** rollers or sliding elements are provided on the screen box (21) for easy horizontal travel.

## Revendications

1. Dispositif pour le traitement des lubrifiants réfrigérants et des copeaux de machines-outils comprenant
- un récipient (1) pour la réception du mélange non traité constitué du liquide lubrifiant réfrigérant et des matières solides,
- une bande transporteuse sans fin (6) installée dans le récipient (1) pour l'évacuation des matières solides collectées hors du récipient (1), et
- au moins une unité de filtration (20) disposée dans le récipient (1), pour la séparation du liquide lubrifiant réfrigérant et des matières solides,
- où l'unité de filtration (20) contient un porte-tamis (21), adjoint à un système de production d'une dépression et pouvant être positionné à l'horizontal dans le récipient (1) entre le brin supérieur (13) et le brin inférieur (11) de la bande transporteuse sans fin (6),
**caractérisé en ce que**
- le porte-tamis (21) conçu sous la forme d'un insert plat comporte deux parois latérales (22, 23), un tamis plat (32) sur son fond et une bande filtrante sans fin (27) qui peut se déplacer longitudinalement, où le liquide lubrifiant réfrigérant est aspiré depuis le bas par la bande filtrante sans fin (27) en passant dans l'espace interne du porte-tamis (21),
- un mécanisme d'insertion (37 - 40), permettant de déplacer le porte-tamis (21) horizontalement pour le faire passer en sa position de fonctionnement et l'en faire sortir latéralement, est prévu sur l'une des parois latérales (23) du porte-tamis (21), et
- une ouverture (41), qui constitue un passage menant dans l'espace intérieur du porte-tamis (21) et communiquant avec une pompe de levage par le biais de moyens de liaison appropriés, est aménagée dans l'autre paroi latérale (22).

2. Dispositif selon la revendication 1, **caractérisé en ce que**, des deux côtés de la bande filtrante sans fin (27), des bandes d'étanchéité (30, 31) sont disposées au-dessus des deux parois latérales (22, 23).

3. Dispositif selon la revendication 1 ou 2, **caractérisé en ce que**, sur les parois latérales (22, 23), des paliers (24, 25) sont prévus pour des poulies (28, 29) de la bande filtrante sans fin (27).

4. Dispositif selon l'une des revendications 1 à 3, **caractérisé en ce que** la bande filtrante sans fin (27) se compose d'un textile en acier à maille fine d'une largeur de maille de 30 à 150 µm, de préférence de 50 à 80 µm.

5. Dispositif selon l'une des revendications précédentes, **caractérisé en ce que** le mécanisme d'insertion (37 à 40) présente une tige de traction et de poussée (39) munie d'une poignée (40) venant en prise sur la paroi latérale (23) du porte-tamis (21).

6. Dispositif selon l'une des revendications précédentes, **caractérisé en ce qu'**un fond intermédiaire (45), doté d'ouvertures de passage latérales (47) et sur lequel se déposent les copeaux les plus gros jusqu'à leur enlèvement par l'entraîneur à raclettes (6), est prévu dans le récipient (1) au-dessus du porte-tamis (21).

7. Dispositif selon l'une des revendications précédentes, **caractérisé en ce qu'**un entraînement direct ou indirect est prévu pour le mouvement rotatif de la bande filtrante sans fin (27).

8. Dispositif selon l'une des revendications précédentes, **caractérisé en ce que** des buses de nettoyage (53), grâce auxquelles le liquide lubrifiant réfrigérant nettoyé est pulvérisé de l'intérieur sur la bande filtrante (27), sont installées dans le porte-tamis (21).

9. Dispositif selon l'une des revendications précédentes, **caractérisé en ce que** des pinces sont prévues sur le porte-tamis (21) afin de maintenir une tension longitudinale continue de la bande filtrante sans fin (27).

10. Dispositif selon l'une des revendications précédentes, **caractérisé en ce que** des rouleaux ou des éléments de glissement sont prévus sur le porte-tamis (21) pour faciliter leur déplacement horizontal.
